# EUROPÄISCHE PATENTANMELDUNG

(11) **EP 3 563 959 A1**
(43) Veröffentlichungstag der Anmeldung: **06.11.2019**
(21) Anmeldenummer: 19167316.9
(22) Anmeldetag: 04.04.2019
(51) Int. Cl.: B23D 47/04, B27B 5/065

(54) **SÄGEVORRICHTUNG**

(30) Priorität: 02.05.2018 DE 102018110513
(71) Anmelder: HOLZ-HER GmbH, 72622 Nürtingen (DE)
(72) Erfinder: STRASSER, Rainer, 4571 Steyrling (AT); GINES, Stefan, 8592 Maria Lankowitz (AT)
(74) Vertreter: Hoeger, Stellrecht & Partner Patentanwälte mbB

(57) **Zusammenfassung**

Die Erfindung betrifft eine Sägevorrichtung (10) zum Aufteilen plattenförmiger Werkstücke (58, 100), mit einem entlang einer Sägelinie (16) verfahrbaren Sägeaggregat (20), einem anhebbaren und absenkbaren Presskörper (24) zum Fixieren der Werkstücke (58, 100) an der Sägelinie (16), und mit einer ersten und einer zweiten Vorschubeinrichtung (36, 60), die unabhängig voneinander in einer horizontal und senkrecht zur Sägelinie (16) ausgerichteten Vorschubrichtung (46) hin und her verfahrbar sind, wobei die erste Vorschubeinrichtung (36) einen ersten Querträger (38) aufweist, der an einem ersten Längsträger (26) und an einem zweiten Längsträger (28) verfahrbar gelagert ist, und wobei die zweite Vorschubeinrichtung (60) einen zweiten Querträger (62) aufweist. Um die Sägevorrichtung (10) konstruktiv einfacher und störungsunempfindlicher auszugestalten, wird erfindungsgemäß vorgeschlagen, dass die Sägevorrichtung (10) einen dritten Längsträger (68) aufweist, der parallel zur Vorschubrichtung (46) ausgerichtet ist, wobei der zweite Querträger (62) nur am dritten Längsträger (68) verfahrbar gelagert ist.

## Beschreibung

Die Erfindung betrifft eine Sägevorrichtung zum Aufteilen plattenförmiger Werkstücke, mit einem entlang einer Sägelinie verfahrbaren Sägeaggregat, einem anhebbaren und absenkbaren Presskörper zum Fixieren der Werkstücke an der Sägelinie, einer ersten und einer zweiten Vorschubeinrichtung, die unabhängig voneinander in einer horizontal und senkrecht zur Sägelinie ausgerichteten Vorschubrichtung hin und her verfahrbar sind zum Verschieben der Werkstücke in einem Vorschubbereich der Sägevorrichtung, wobei mittels der ersten Vorschubeinrichtung erste Werkstücke in einer ersten vorgebbaren Stellung relativ zur Sägelinie positionierbar sind, und wobei mittels der zweiten Vorschubeinrichtung zweite Werkstücke in einer zweiten vorgebbaren Stellung relativ zur Sägelinie positionierbar sind, und mit einem ersten und einem zweiten Längsträger, zwischen denen der Vorschubbereich angeordnet ist und die parallel zur Vorschubrichtung ausgerichtet sind, wobei die erste Vorschubeinrichtung einen ersten Querträger aufweist, der am ersten Längsträger und am zweiten Längsträger verfahrbar gelagert ist und an dem mehrere erste Greifeinrichtungen zum Ergreifen der ersten Werkstücke angeordnet sind, und wobei die zweite Vorschubeinrichtung einen zweiten Querträger aufweist, an dem mindestens eine zweite Greifeinrichtung zum Ergreifen der zweiten Werkstücke angeordnet ist.

Mit Hilfe einer derartigen Sägevorrichtung können plattenförmige Werkstücke, insbesondere Werkstücke aus Holz oder Holzersatzstoffen, beispielsweise Spanplatten, zugeschnitten werden. Hierbei können mehrere Werkstücke aufeinandergestapelt und gleichzeitig zugeschnitten werden.

Die Sägevorrichtung weist einen Vorschubbereich auf, der zwischen einem ersten Längsträger und einem zweiten Längsträger angeordnet ist und in dem die aufzuteilenden Werkstücke angeordnet werden können.

Häufig umfassen Sägevorrichtungen zum Aufteilen plattenförmiger Werkstücke eine einzige Vorschubeinrichtung, die es ermöglicht, mit Hilfe von Greifeinrichtungen die aufzuteilenden Werkstücke zu ergreifen und in einer programmtechnisch vorgebbaren Stellung relativ zur Sägelinie zu positionieren, so dass sie anschließend mit Hilfe des entlang der Sägelinie verfahrbaren Sägeaggregats aufgeteilt werden können.

Um die Effizienz der Sägevorrichtungen zu erhöhen, sind Ausgestaltungen bekannt, bei denen zwei Vorschubeinrichtungen zum Einsatz kommen, die unabhängig voneinander jeweils Werkstücke ergreifen und in einer programmtechnisch vorgebbaren Stellung relativ zur Sägelinie positionieren können. Dies erlaubt es, gleichzeitig zwei Werkstücke oder zwei Stapel von Werkstücken mit unterschiedlichen Schnittmaßen aufzuteilen, indem das Sägeaggregat entlang der Sägelinie verfahren wird und hierbei beide Werkstücke bzw. beide Werkstückstapel auftrennt.

Eine Sägevorrichtung mit zwei Vorschubeinrichtungen ist beispielsweise aus der EP 1 510 276 B9 bekannt. Eine erste Vorschubeinrichtung weist einen ersten Querträger auf, an dem mehrere erste Greifeinrichtungen gehalten sind und der an einem ersten Längsträger und an einem zweiten Längsträger in Vorschubrichtung verfahrbar gelagert ist. Der erste Querträger übergreift den kompletten Vorschubbereich der Sägevorrichtung und ermöglicht es, erste Werkstücke in einer ersten vorgebbaren Stellung relativ zur Sägelinie zu positionieren. Eine zweite Vorschubeinrichtung weist einen zweiten Querträger auf, der an einem Schlitten parallel zur Sägelinie verfahrbar gelagert ist. Dies ermöglicht es, den zweiten Querträger ausgehend von einer Ruhestellung, in der er seitlich neben dem Vorschubbereich positioniert ist, in eine Arbeitsstellung zu verfahren, in der er in den Vorschubbereich hineinragt. Der Schlitten ist an der Unterseite des zweiten Längsträgers in Vorschubrichtung verfahrbar gelagert. Dies erlaubt es, den zweiten Querträger zusammen mit dem Schlitten in entsprechender Weise wie den ersten Querträger in Vorschubrichtung zu verfahren, um in der Arbeitsstellung zweite Werkstücke in einer zweiten vorgebbaren Stellung relativ zur Sägelinie zu positionieren. Insgesamt zeichnet sich die Sägevorrichtung durch eine konstruktiv aufwändige Ausgestaltung aus, die die Gefahr von Störungen birgt.

Eine weitere Sägevorrichtung mit zwei unabhängig voneinander verfahrbaren Vorschubeinrichtungen ist aus der EP 2 316 602 B1 bekannt. Bei dieser Sägevorrichtung ist ein erster Querträger an einem ersten Längsträger und an einem zweiten Längsträger in Vorschubrichtung verfahrbar gelagert und zusätzlich ist an der Unterseite des ersten Längsträgers ein Schlitten gehalten, der unabhängig vom ersten Querträger in Vorschubrichtung verfahrbar ist und an dem mehrere zweite Greifeinrichtungen angeordnet sind. Um dem Schlitten den erforderlichen Bauraum zu verschaffen, überragt der erste Längsträger einen seitlichen Randabschnitt des Vorschubbereichs der Sägevorrichtung. Der erste Längsträger unterliegt daher einer erheblichen mechanischen Belastung. Dies birgt ebenfalls die Gefahr von Störungen.

Aus der EP 2 111 939 B1 ist eine Sägevorrichtung mit zwei Vorschubeinrichtungen bekannt, bei der die erste Vorschubeinrichtung einen ersten Querträger aufweist, der an den dem Vorschubbereich zugewandten Innenseiten eines ersten Längsträgers und eines zweiten Längsträgers in Vorschubrichtung verfahrbar gehalten ist. Die zweite Vorschubeinrichtung weist einen an der dem Vorschubbereich abgewandten Außenseite des ersten Längsträgers in Vorschubrichtung verfahrbar gelagerten Schlitten auf, an dem ein zweiter Querträger senkrecht zur Vorschubrichtung verfahrbar gelagert ist. Auch diese Sägevorrichtung zeichnet sich durch eine konstruktiv aufwändige Ausgestaltung aus, die die Gefahr von Störungen birgt.

Eine weitere Sägevorrichtung, bei der ein erster Querträger mit ersten Greifeinrichtungen an zwei Längsträgern verfahrbar gehalten ist, und bei der zusätzlich an der Unterseite eines der beiden Längsträger ein Schlitten in Vorschubrichtung verfahrbar gelagert ist, an dem eine zweite Greifeinrichtung gehalten ist, ist aus der EP 1 964 653 B1 bekannt.

Aufgabe der vorliegenden Erfindung ist es, eine Sägevorrichtung der eingangs genannten Art derart weiterzubilden, dass sie eine konstruktiv einfachere und störungsunanfälligere Ausgestaltung aufweist.

Diese Aufgabe wird bei einer Sägevorrichtung der gattungsgemäßen Art erfindungsgemäß dadurch gelöst, dass die Sägevorrichtung einen dritten Längsträger aufweist, der parallel zur Vorschubrichtung ausgerichtet ist, wobei der zweite Querträger nur am dritten Längsträger verfahrbar gelagert ist.

Bei der erfindungsgemäßen Sägevorrichtung kommt zusätzlich zu einem ersten Längsträger und einem zweiten Längsträger ein dritter Längsträger zum Einsatz. Der erste Querträger ist am ersten Längsträger und am zweiten Längsträger verfahrbar gelagert, und der zweite Querträger ist am dritten Längsträger verfahrbar gelagert. Zur Lagerung des zweiten Querträgers kommt also ein separater dritter Längsträger zum Einsatz. Der erste und der zweite Längsträger erfahren ihre mechanische Belastung durch den ersten Querträger, und der dritte Längsträger erfährt seine mechanische Belastung durch den zweiten Querträger. Die erfindungsgemäße Sägevorrichtung weist somit eine konstruktiv einfache und störungsunanfällige Ausgestaltung auf.

Die erfindungsgemäße Sägevorrichtung hat darüber hinaus den Vorteil, dass die aufzuteilenden Werkstücke mit Hilfe von Beschickungssystemen bereitgestellt werden können, insbesondere mit Hilfe von Hubtisch-Beschickungen oder auch Lager-Beschickungen. Die Bereitstellung der Werkstücke kann beispielsweise von unten mit Hilfe eines Hubtisches, oder auch vorzugswese über Lager-Beschickungen von oben, von hinten oder von der Seite, insbesondere über zusätzliche Rollbahnen, erfolgen.

Außerdem hat die erfindungsgemäße Sägevorrichtung den Vorteil, dass weder der Vorschubbereich der Vorrichtung noch die Schnittlänge durch die zweite Vorschubeinrichtung beeinträchtigt werden.

Von besonderem Vorteil ist es, wenn der erste Längsträger identisch ausgestaltet ist wie der zweite Längsträger.

Bevorzugt sind der erste Längsträger und der zweite Längsträger als Doppel-T-Profil oder Hohlprofil ausgestaltet.

Der zweite Querträger weist bei einer vorteilhaften Ausführungsform der Erfindung einen ersten Endbereich und einen dem ersten Endbereich abgewandten zweiten Endbereich auf, wobei der erste Endbereich am dritten Längsträger verfahrbar gelagert ist und der zweite Endbereich ein freies Ende des zweiten Querträgers ausbildet, der in Richtung auf den Vorschubbereich seitlich vom dritten Längsträger absteht. Der zweite Querträger ist somit nur an seinem ersten Endbereich abgestützt, nämlich am dritten Längsträger in Vorschubrichtung verfahrbar gelagert, ansonsten ist der zweite Querträger von keinem weiteren Bauelement abgestützt, insbesondere bildet der dem ersten Endbereich abgewandte zweite Endbereich des zweiten Querträgers ein freies Ende aus.

Von Vorteil ist es, wenn der erste Längsträger und der dritte Längsträger übereinander angeordnet sind. Dies erlaubt eine besonders kompakte Ausgestaltung der erfindungsgemäßen Sägevorrichtung.

Es kann beispielsweise vorgesehen sein, dass der erste Längsträger über dem dritten Längsträger angeordnet ist.

Insbesondere kann vorgesehen sein, dass der dritte Längsträger innerhalb der vertikalen Projektionsfläche des ersten Längsträgers angeordnet ist. Bei einer derartigen Ausgestaltung ragt der dritte Längsträger in einer Draufsicht auf die Sägevorrichtung nicht seitlich aus dem Bereich des ersten Längsträgers heraus.

Der erste Querträger ist vorzugsweise als den Vorschubbereich der Sägevorrichtung übergreifender Schlitten ausgestaltet.

Der zweite Querträger ist vorzugsweise balkenförmig ausgestaltet und steht in Richtung auf den Vorschubbereich seitlich vom dritten Längsträger ab.

Von Vorteil ist es, wenn der dritten Längsträger als Doppel-T-Profil oder als Hohlprofil ausgestaltet ist.

Es kann beispielsweise vorgesehen sein, dass der dritte Längsträger als Rechteckprofil ausgestaltet ist.

Bei einer vorteilhaften Ausgestaltung der Erfindung sind am dritten Längsträger zwei Führungselemente angeordnet, an denen der zweite Querträger verfahrbar gelagert ist. Die beiden Führungselemente können eine identische Ausgestaltung aufweisen.

Bevorzugt sind die am dritten Längsträger angeordneten Führungselemente als Führungsschienen ausgestaltet. Insbesondere kann vorgesehen sein, dass die Führungsschienen mit ortsfest am zweiten Querträger angeordneten Gleitschuhen formschlüssig zusammenwirken.

Es kann vorgesehen sein, dass mindestens eine zweite Greifeinrichtung am zweiten Querträger unverschiebbar gehalten ist.

Bei einer besonders bevorzugten Ausgestaltung der Erfindung ist zumindest eine zweite Greifeinrichtung am zweiten Querträger parallel zur Sägelinie verschiebbar gelagert.

Die Verschiebung der mindestens einen zweiten Greifeinrichtung kann beispielsweise manuell erfolgen.

Von besonderem Vorteil ist es, wenn am zweiten Querträger eine Antriebseinrichtung zum Verschieben von mindestens einer zweiten Greifeinrichtung angeordnet ist. Die Antriebseinrichtung kann beispielswiese einen Elektromotor oder ein Kolben-Zylinderaggregat aufweisen, insbesondere ein pneumatisches oder hydraulisches Kolben-Zylinderaggregat.

Bevorzugt sind am zweiten Querträger mindestens zwei Greifeinrichtungen angeordnet.

Die zweiten Greifeinrichtungen sind vorteilhafterweise identisch ausgebildet.

Von besonderem Vorteil ist es, wenn die mindestens eine am zweiten Querträger angeordnete zweite Greifeinrichtung zwischen einer abgesenkten Stellung und einer angehobenen Stellung hin und her bewegbar ist. Soll mittels der zweiten Vorschubeinrichtung ein zweites Werkstück oder ein Stapel von zweiten Werkstücken in einer vorgebbaren Stellung relativ zur Sägelinie positioniert werden, so kann zumindest eine der zweiten Greifeinrichtungen ihre abgesenkte Stellung einnehmen, um das zweite Werkstück oder den Stapel von zweiten Werkstücken zu ergreifen. Soll lediglich mittels der ersten Vorschubeinrichtung ein Werkstück oder ein Stapel von Werkstücken in einer vorgebbaren Stellung relativ zur Sägelinie positioniert werden, so kann die mindestens eine zweite Greifeinrichtung ihre angehobene Stellung einnehmen. Das Anheben der mindestens einen zweiten Greifeinrichtung ermöglicht es insbesondere, mittels der ersten Vorschubeinrichtung erste Werkstücke relativ zur Sägelinie zu positionieren, wobei sich die ersten Werkstücke praktisch über die gesamte Breite des Vorschubbereichs der Sägevorrichtung erstrecken, ohne dass die ersten Werkstücke von der mindestens einen zweiten Greifeinrichtung behindert werden.

Von Vorteil ist es, wenn zumindest eine der am ersten Querträger angeordneten ersten Greifeinrichtungen zwischen einer abgesenkten Stellung und einer angehobenen Stellung hin und her bewegbar ist.

Von besonderem Vorteil ist es, wenn die am ersten Querträger angeordneten ersten Greifeinrichtungen identisch ausgestaltet sind.

Bei einer besonders bevorzugten Ausführungsform der Erfindung ist die mindestens eine am zweiten Querträger angeordnete zweite Greifeinrichtung identisch ausgestaltet wie die am ersten Querträger angeordneten ersten Greifeinrichtungen.

Die nachfolgende Beschreibung einer vorteilhaften Ausführungsform der Erfindung dient im Zusammenhang mit der Zeichnung der näheren Erläuterung. Es zeigen:
- Figur 1:: eine perspektivische Darstellung einer vorteilhaften Ausführungsform einer erfindungsgemäßen Sägevorrichtung;
- Figur 2:: eine Vorderansicht einer ersten und einer zweiten Vorschubeinrichtung der Sägevorrichtung aus Figur 1;
- Figur 3:: eine vergrößerte Darstellung von Detail A aus Figur 2, wobei eine zweite Greifeinrichtung der zweiten Vorschubeinrichtung eine verglichen mit Figur 2 versetzte Position einnimmt.

In der Zeichnung ist eine vorteilhafte Ausführungsform einer erfindungsgemäßen Sägevorrichtung schematisch dargestellt und insgesamt mit dem Bezugszeichen 10 belegt. Die Sägevorrichtung 10 weist ein Maschinengestell 12 auf, das einen Sägetisch 14 ausbildet. Der Sägetisch 14 weist einen an sich bekannten und deshalb zur Erzielung einer besseren Übersicht in der Zeichnung nicht dargestellten Sägespalt auf, der sich entlang einer Sägelinie 16 erstreckt. Unterhalb des Sägespalts ist ein Transportwagen 18 entlang der Sägelinie 16 hin und her verfahrbar am Maschinengestell 12 gelagert. Am Transportwagen 18 ist ein Sägeaggregat 20 angeordnet, das mindestens ein Sägeblatt 22 aufweist.

Oberhalb des Sägetisches 14 weist die Sägevorrichtung 10 einen Presskörper auf, der im dargestellten Ausführungsbeispiel als Druckbalken 24 ausgestaltet ist. Der Druckbalken 24 kann mittels an sich bekannter und deshalb in der Zeichnung zur Erzielung einer besseren Übersicht nicht dargestellter Antriebsaggregate angehoben und abgesenkt werden. Der Druckbalken 24 weist wie üblich ein ungefähr U-förmiges Querschnittsprofil auf mit einer dem Sägetisch 14 zugewandten schlitzförmigen Druckbalkenöffnung, in die bei der Durchführung eines Sägeschnitts das aus dem Sägespalt nach oben herausragende Sägeblatt 22 eintreten kann.

Senkrecht zur Sägelinie 16 sind ein erster Längsträger 26 und ein zweiter Längsträger 28 ausgerichtet, die identisch jeweils als Doppel-T-Profil ausgestaltet sind. Zwischen dem ersten Längsträger 26 und dem zweiten Längsträger 28 weist die Sägevorrichtung 10 einen Vorschubbereich 30 auf, der im dargestellten Ausführungsbeispiel von einem Werkstückauflagetisch 32 gebildet wird. Der Werksstückauflagetisch 32 weist eine Vielzahl von frei drehbaren Stützrollen 34 auf, die in einer Horizontalebene angeordnet sind. Auf die Stützrollen 34 können aufzuteilende Werkstücke 58, 100 aufgelegt werden.

Zwischen dem ersten Längsträger 26 und dem zweiten Längsträger 28 erstreckt sich eine erste Vorschubeinrichtung 36, die einen ersten Querträger 38 aufweist. Am ersten Querträger 38 sind mehrere identisch ausgestaltete erste Greifeinrichtungen 40 gelagert, die zwischen einer abgesenkten und einer angehobenen Stellung hin und her bewegbar sind.

Der erste Querträger 38 erstreckt sich vom ersten Längsträger 26 bis zum zweiten Längsträger 28 und übergreift den kompletten Vorschubbereich 30 der Sägevorrichtung 10. Zur verfahrbaren Lagerung des ersten Querträgers 38, der nach Art eines Schlittens ausgebildet ist, sind am ersten Längsträger 26 und am zweiten Längsträger 28 identisch ausgestaltete Führungsschienen 42 angeordnet, die sich praktisch über die gesamte Länge des ersten Längsträgers 26 und des zweiten Längsträgers 28 erstrecken und denen jeweils ein Gleitschuh 44 zugeordnet ist. Die Gleitschuhe 44 sind an den einander abgewandten Enden des ersten Querträgers 38 angeordnet und bilden mit der jeweils zugeordneten Führungsschiene 42 einen Formschluss aus in Form einer Gleitlagerung.

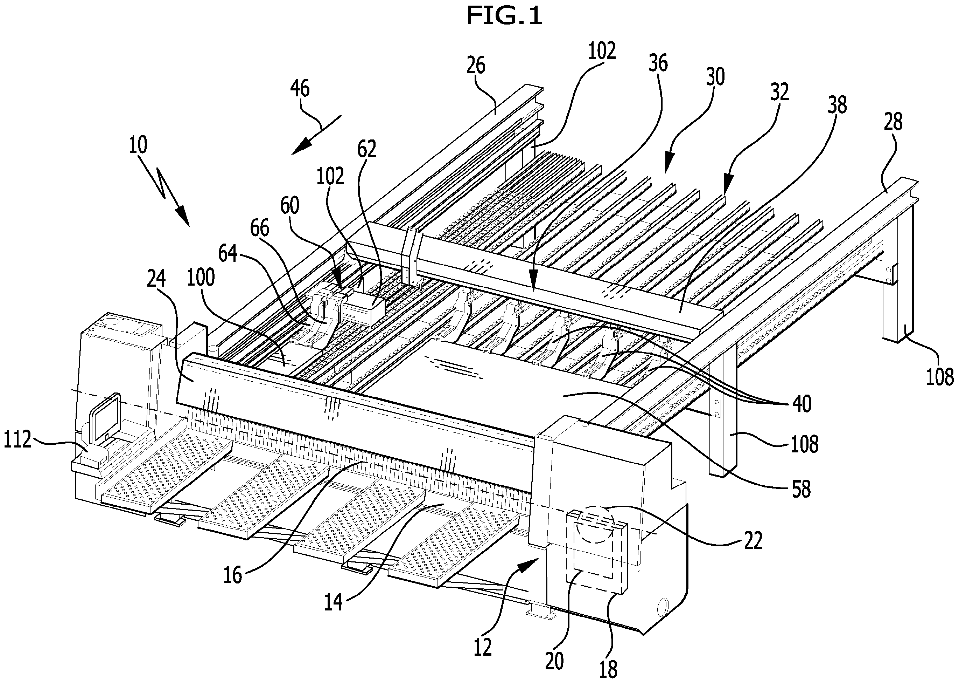

Der erste Querträger 38 kann in einer senkrecht zur Sägelinie 16 ausgerichteten Vorschubrichtung, die in Figur 1 durch den Pfeil 46 veranschaulicht ist, hin und her verfahren werden. Als Fahrantrieb dient ein an sich bekannter und deshalb zur Erzielung einer besseren Übersicht in der Zeichnung nicht dargestellter Elektromotor, der am ersten Querträger 38 angeordnet ist und eine sich über die gesamte Länge des ersten Längsträgers 26 erstreckende Antriebswelle 48 drehend antreibt. An ihrem dem ersten Längsträger 26 zugewandten Ende trägt die Antriebswelle 48 ein erstes Ritzel 50, das mit einer am ersten Längsträger 26 ortsfest gehaltenen ersten Zahnstange 52 in Eingriff steht, und an ihrem dem zweiten Längsträger 28 zugewandten Ende trägt die Antriebswelle 48 ein zweites Ritzel 54, das mit einer ortsfest am zweiten Längsträger 28 angeordneten zweiten Zahnstange 56 in Eingriff steht. Mit Hilfe der jeweils mit einer Zahnstange 52, 56 in Eingriff stehenden Ritzeln 50, 54 kann der erste Querträger 38 in Vorschubrichtung 46 und entgegen der Vorschubrichtung 46 verfahren werden. Dies erlaubt es, erste Werkstücke 58 in einer vorgebbaren Stellung relativ zur Sägelinie 16 zu positionieren zur Vornahme eines Sägeschnittes. Die ersten Werkstücke 58 können hierbei von den ersten Greifeinrichtungen 40 ergriffen werden, die zu diesem Zweck ihre abgesenkte Stellung einnehmen.

Die Sägevorrichtung 10 weist darüber hinaus eine zweite Vorschubeinrichtung 60 auf, die einen zweiten Querträger 62 aufweist. Am zweiten Querträger 62 sind im dargestellten Ausführungsbeispiel zwei zweite Greifeinrichtungen 64, 66 gehalten, die zwischen einer in der Zeichnung nicht dargestellten angehobenen Stellung und einer in der Zeichnung dargestellten abgesenkten Stellung hin und her bewegbar sind.

Der zweite Querträger 62 kann in Vorschubrichtung 46 hin und her verfahren werden. Er ist an einem dritten Längsträger 68 verfahrbar gelagert. Der dritte Längsträger 68 kommt zusätzlich zu den ersten und zweiten Längsträgern 26, 28 zum Einsatz und ist unterhalb des ersten Längsträgers 26 parallel zu diesem ausgerichtet angeordnet.

Der dritte Längsträger 68 ist im dargestellten Ausführungsbeispiel als Rechteckprofil ausgebildet, an dessen Oberseite 70 eine Halteleiste 72 festgelegt ist, an deren Oberseite eine sich praktisch über die gesamte Länge des dritten Längsträgers 68 erstreckende Führungsschiene 74 festgelegt ist.

Die Halteleiste 72 überragt in Richtung des Vorschubbereichs 30 eine dem Vorschubbereich 30 zugewandte Längsseite 76 des dritten Längsträgers. An der Längsseite 76 ist eine weitere Führungsschiene 78 angeordnet, die identisch ausgestaltet ist wie die Führungsschiene 74. An der der weiteren Führungsschiene 78 zugewandten Unterseite der Halteleiste 72 ist eine Zahnstange 80 gehalten, die sich praktisch über die gesamte Länge der Halteleiste 72 und damit über die gesamte Länge des dritten Längsträgers 68 erstreckt.

Der zweite Querträger 62 weist einen dem dritten Längsträger 68 zugewandten ersten Endbereich 82 und einen dem dritten Längsträger 68 abgewandten zweiten Endbereich 84 auf. Im ersten Endbereich 82 trägt der dritte Längsträger 68 zwei identisch ausgestaltete Führungselemente in Form von Gleitschuhen 86, 88, die jeweils mit einer Führungsschiene 74, 78 einen Formschluss ausbilden in Form einer Gleitlagerung.

Zum Verschieben des zweiten Querträgers 62 in Vorschubrichtung 46 und entgegen der Vorschubrichtung 46 ist am zweiten Querträger 62 eine in der Zeichnung zur Erzielung einer besseren Übersicht nicht dargestellte, an sich bekannte Antriebseinrichtung in Form eines Elektromotors angeordnet, der eine Antriebswelle 90 drehend antreibt, die an ihrem dem dritten Längsträger 68 zugewandten Ende ein Ritzel 92 trägt, das mit der Zahnstange 80 in Eingriff steht.

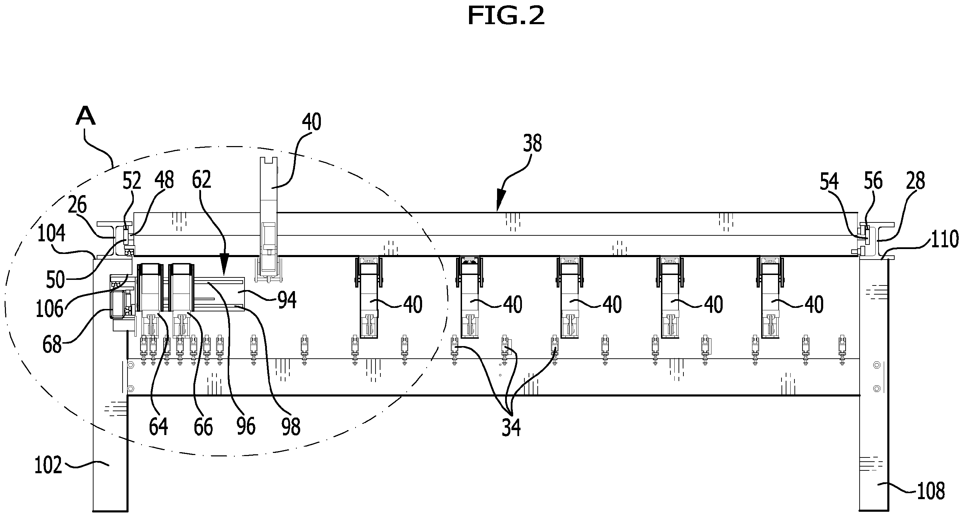

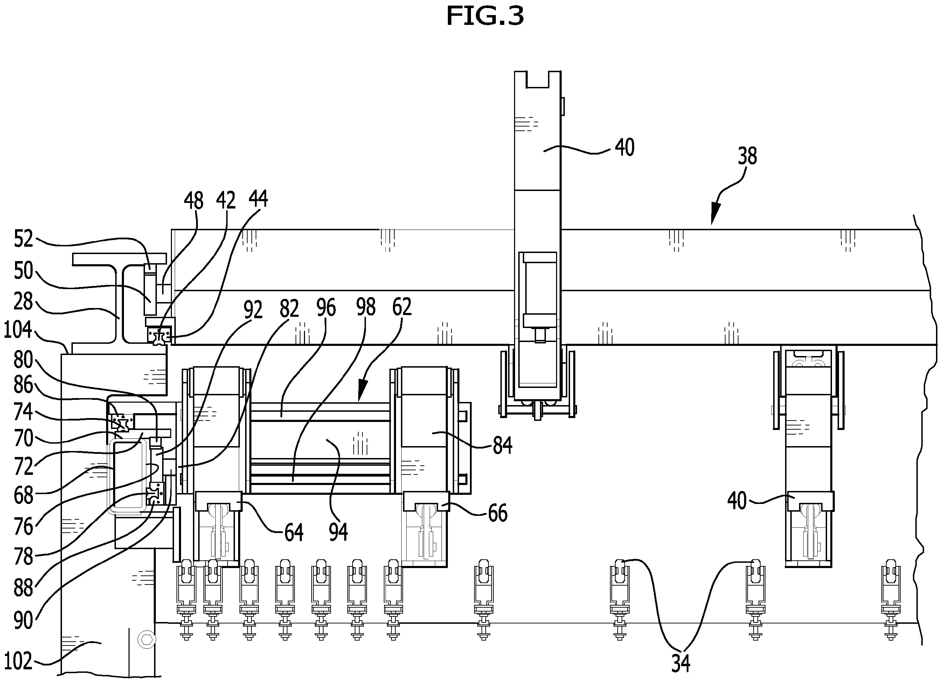

An seiner der Sägelinie 16 zugewandten Stirnseite 94 trägt der zweite Querträger 62 zwei weitere Führungsschienen 96, 98, an denen die zweiten Greifeinrichtungen 64, 66 gehalten sind. Die zweite Greifeinrichtung 66 kann mittels eines an sich bekannten und deshalb zur Erzielung einer besseren Übersicht in der Zeichnung nicht dargestellten pneumatischen Antriebs längs der Führungsschienen 96, 98 zwischen einer ersten Endstellung und einer zweiten Endstellung hin und her verschoben werden. In den Figuren 1 und 2 nimmt die zweite Greifeinrichtung 66 ihre erste Endstellung ein und in der Figur 3 nimmt die zweite Greifeinrichtung 66 ihre zweite Endstellung ein. In der ersten Endstellung ist der Abstand der zweiten Greifeinrichtung 66 zum ersten Endbereich 82 des zweiten Querträgers 62 kleiner als in der zweiten Endstellung.

Mittels der zweiten Vorschubeinrichtung 60 können unabhängig von der ersten Vorschubeinrichtung 36 zweite Werkstücke 100 in einer vorgebbaren Stellung relativ zur Sägelinie 16 positioniert werden. Die zweiten Werkstücke 100 können von den zweiten Greifeinrichtungen 64, 66 ergriffen werden, die zu diesem Zweck ihre abgesenkte Stellung einnehmen.

Der nur in seinem ersten Endbereich 82 nicht aber in seinem zweiten Endbereich 84 verfahrbar gelagerte zweite Querträger 62 ist balkenförmig ausgestaltet und steht in Richtung des Vorschubbereichs 30 vom dritten Längsträger 68 seitlich ab. Er kann unabhängig vom ersten Querträger 38 in Vorschubrichtung 46 hin und her verfahren werden. Der dritte Längsträger 68 ist gleich lang wie der erste Längsträger 26 und der zweite Längsträger 28. Dies erlaubt es, den zweiten Querträger 62 ebenso wie den ersten Querträger 38 über die gesamte Länge des Vorschubbereichs 30 zu verfahren.

Der erste Querträger 38 nimmt einen größeren vertikalen Abstand zu den Stützrollen 34 des Werkstückauflagetischs 32 ein als der zweite Querträger 62. Der zweite Querträger 62 kann daher vom ersten Querträger 38 ungehindert überfahren werden.

Zur vertikalen Abstützung des ersten Längsträgers 26 und des dritten Längsträgers 68 weist die Sägevorrichtung 10 mehrere erste Stützpfeiler 102 auf, die auf ihrer Oberseite 104 den ersten Längsträger 26 tragen und die eine dem Vorschubbereich 30 zugewandte seitliche Ausnehmung 106 aufweisen, in der der dritte Längsträger 68 gehalten ist.

Zur vertikalen Abstützung des zweiten Längsträgers 28 weist die Sägevorrichtung 10 mehrere zweite Stützpfeiler 108 auf, die auf ihrer Oberseite 110 den zweiten Längsträger 28 tragen.

Wie voranstehend erläutert, erlaubt es die Sägevorrichtung 10, erste Werkstücke 58 und zweite Werkstücke 100 unabhängig voneinander in jeweils gewünschten Stellungen relativ zur Sägelinie 16 zu positionieren, so dass während der Durchführung eines Sägeschnittes des Sägeaggregates 20 gleichzeitig die ersten Werkstücke 58 und die zweiten Werkstücke 100 aufgeteilt werden können, wobei die ersten und zweiten Werkstücke 58, 100 während der Durchführung eines Sägeschnitts mittels des Druckbalkens 24 an der Sägelinie 16 festgelegt werden können.

Zur programmtechnischen Vorgabe der gewünschten Stellungen der ersten Werkstücke 58 und der zweiten Werkstücke 100 relativ zur Sägelinie 16 weist die Sägevorrichtung 10 eine programmierbare Steuereinheit 112 auf.

Die Bereitstellung des zusätzlich zu den ersten und zweiten Längsträgern 26, 28 zum Einsatz kommenden dritten Längsträgers 68, an dem der zweite Querträger 62 verfahrbar gelagert ist, erlaubt es, den ersten Längsträger 26 identisch wie den zweiten Längsträger 28 auszugestalten und dadurch die Herstellungskosten der Sägevorrichtung 10 zu reduzieren. Darüber hinaus ist die Sägevorrichtung 10 sehr störungsunanfällig und zeichnet sich durch eine kompakte Ausgestaltung aus.

## Patentansprüche

1. Sägevorrichtung zum Aufteilen plattenförmiger Werkstücke (58, 100), mit einem entlang einer Sägelinie (16) verfahrbaren Sägeaggregat (20), einem anhebbaren und absenkbaren Presskörper (24) zum Fixieren der Werkstücke (58, 100) an der Sägelinie (16), einer ersten Vorschubeinrichtung (36) und einer zweiten Vorschubeinrichtung (60), die unabhängig voneinander in einer horizontal und senkrecht zur Sägelinie (16) ausgerichteten Vorschubrichtung (46) hin und her verfahrbar sind zum Verschieben der Werkstücke (58, 100) in einem Vorschubbereich (30) der Sägevorrichtung (10), wobei mittels der ersten Vorschubeinrichtung (36) erste Werkstücke (58) in einer ersten vorgebbaren Stellung relativ zur Sägelinie (16) positionierbar sind, und wobei mittels der zweiten Vorschubeinrichtung (60) zweite Werkstücke (100) in einer zweiten vorgebbaren Stellung relativ zur Sägelinie (16) positionierbar sind, und mit einem ersten Längsträger (26) und einem zweiten Längsträger (28), zwischen denen der Vorschubbereich (30) angeordnet ist und die parallel zur Vorschubrichtung (46) ausgerichtet sind, wobei die erste Vorschubeinrichtung (36) einen ersten Querträger (38) aufweist, der am ersten Längsträger (26) und am zweiten Längsträger (28) verfahrbar gelagert ist und an dem mehrere erste Greifeinrichtungen (40) zum Ergreifen der ersten Werkstücke (58) angeordnet sind, und wobei die zweite Vorschubeinrichtung (60) einen zweiten Querträger (62) aufweist, an dem mindestens eine zweite Greifeinrichtung (64, 66) zum Ergreifen der zweiten Werkstücke (100) angeordnet ist, **dadurch gekennzeichnet, dass** die Sägevorrichtung (10) einen dritten Längsträger (68) aufweist, der parallel zur Vorschubrichtung (46) ausgerichtet ist, wobei der zweite Querträger (62) nur am dritten Längsträger (68) verfahrbar gelagert ist.

2. Sägevorrichtung nach Anspruch 1, **dadurch gekennzeichnet, dass** der erste Längsträger (26) identisch ausgestaltet ist wie der zweite Längsträger (28).

3. Sägevorrichtung nach Anspruch 2, **dadurch gekennzeichnet, dass** der erste Längsträger (26) und der zweite Längsträger (28) als Doppel-T-Profil oder als Hohlprofil ausgestaltet sind.

4. Sägevorrichtung nach einem der voranstehenden Ansprüche, **dadurch gekennzeichnet, dass** der zweite Querträger (62) einen ersten Endbereich (82) und einen dem ersten Endbereich (82) abgewandten zweiten Endbereich (84) aufweist, wobei der erste Endbereich (82) am dritten Längsträger (68) verfahrbar gelagert ist und der zweite Endbereich (84) ein freies Ende des zweiten Querträgers (62) ausbildet, der in Richtung auf den Vorschubbereich (30) vom dritten Längsträger (68) absteht.

5. Sägevorrichtung nach einem der voranstehenden Ansprüche, **dadurch gekennzeichnet, dass** der erste und der dritte Längsträger (26, 68) übereinander angeordnet sind.

6. Sägevorrichtung nach einem der voranstehenden Ansprüche, **dadurch gekennzeichnet, dass** der erste Längsträger (26) über dem dritten Längsträger (68) angeordnet ist.

7. Sägevorrichtung nach einem der voranstehenden Ansprüche, **dadurch gekennzeichnet, dass** der erste Querträger (38) als den Vorschubbereich (30) der Sägevorrichtung (10) übergreifender Schlitten ausgestaltet ist.

8. Sägevorrichtung nach einem der voranstehenden Ansprüche, **dadurch gekennzeichnet, dass** der zweite Querträger (62) balkenförmig ausgestaltet ist und in Richtung auf den Vorschubbereich (30) vom dritten Längsträger (68) absteht.

9. Sägevorrichtung nach einem der voranstehenden Ansprüche, **dadurch gekennzeichnet, dass** der dritte Längsträger (68) als Doppel-T-Profil oder als Hohlprofil ausgestaltet ist.

10. Sägevorrichtung nach Anspruch 9, **dadurch gekennzeichnet, dass** der dritte Längsträger (68) als Rechteckprofil ausgestaltet ist.

11. Sägevorrichtung nach einem der voranstehenden Ansprüche, **dadurch gekennzeichnet, dass** am dritten Längsträger (68) zwei Führungselemente angeordnet sind, an denen der zweite Querträger (62) verfahrbar gelagert ist.

12. Sägevorrichtung nach Anspruch 11, **dadurch gekennzeichnet, dass** die Führungselemente als Führungsschienen (74, 78) ausgestaltet sind.

13. Sägevorrichtung nach einem der voranstehenden Ansprüche, **dadurch gekennzeichnet, dass** mindestens eine zweite Greifeinrichtung (64, 66) am zweiten Querträger (62) unverschiebbar gehalten ist.

14. Sägevorrichtung nach einem der voranstehenden Ansprüche, **dadurch gekennzeichnet, dass** zumindest eine zweite Greifeinrichtung (66) am zweiten Querträger (62) parallel zur Sägelinie (16) verschiebbar gelagert ist.

15. Sägevorrichtung nach einem der voranstehenden Ansprüche, **dadurch gekennzeichnet, dass** am zweiten Querträger (62) mindestens zwei zweite Greifeinrichtungen (64, 66) angeordnet sind.

16. Sägevorrichtung nach einem der voranstehenden Ansprüche, **dadurch gekennzeichnet, dass** die mindestens eine zweite Greifeinrichtung (64, 66) zwischen einer abgesenkten Stellung und einer angehobenen Stellung hin und her bewegbar ist.

17. Sägevorrichtung nach einem der voranstehenden Ansprüche, **dadurch gekennzeichnet, dass** zumindest eine erste Greifeinrichtung (40) zwischen einer abgesenkten Stellung und einer angehobenen Stellung hin und her bewegbar ist.

18. Sägevorrichtung nach einem der voranstehende n Ansprüche, **dadurch gekennzeichnet, dass** die mindestens eine zweite Greifeinrichtung (64, 66) und die ersten Greifeinrichtungen (40) identisch ausgestaltet sind.
